# EUROPEAN PATENT APPLICATION

(11) **EP 2 940 647 A1**
(43) Date of publication of application: **04.11.2015**
(21) Application number: 12890822.5
(22) Date of filing: 28.12.2012
(51) Int. Cl.: G06Q 40/02

(54) **METHOD FOR PROCESSING ISSUANCE OF MOBILE CREDIT CARD**

(30) Priority: 26.12.2012 KR 20120152807
(71) Applicant: Shinhancard Co., Ltd., Seoul 100-709 (KR); KB Kookmincard Co., Ltd., Jongno-gu Seoul 110-719 (KR); Hyundai Card Co., Ltd., Seoul 150-706 (KR); Samsung Card Co., Ltd., Seoul 100-742 (KR); Lotte Card Co., Ltd., Seoul 100-778 (KR); Nonghyup Bank, Seoul 100-151 (KR)
(72) Inventor: PARK, Hae Chul, Seoul 156-030 (KR); KIM, Byungsoo, Seoul 140-040 (KR); LEE, Jeongjin, Seoul 138-220 (KR)
(74) Representative: Thibon, Laurent
(86) International application number: PCT/KR2012/011680
(87) International publication number: WO 2014/104434

(57) **Abstract**

Disclosed is a method for processing the issuance of a mobile credit card, which is capable of shortening the time taken to issue a mobile credit card and in which card information transmitted from a card company server to a financial chip is processed by a one-time transmission. Thus the frequency of stoppages in the issuance of a credit card, which are caused by disconnections or interferences in a wireless communication, is reduced and stability of issuing a credit card is improved.

## Description

### Technical Field

The present invention generally relates to a method for processing the issuance of a credit card and, more particularly, to a method for processing the issuance of a mobile credit card, which can rapidly and stably issue credit card information to a mobile payment device.

### Background Art

A payment device, such as a mobile phone and a smart phone may be used as a means for mobile payment by going beyond the original function of such devices for voice communication, Internet access, and data communication.

For this, a payment device is equipped with a Subscriber Identity Module (SIM), a Universal Subscriber Identity Module (USIM) or a financial chip issued by another financial company, and provides card information when approaching or coming into contact with a payment terminal using the financial chip, thus enabling mobile payment to be processed.

In order to perform mobile payment, there is a need to install card information, provided from a card company to be used for payment, and a payment application (App) for payment in a financial chip embedded in a payment device. Such a payment App is installed and used in a storage medium provided in the payment device. However, card information must be embedded in a financial chip having excellent security, and the application identifier of the installed payment App and card information may be stored together in the financial chip.

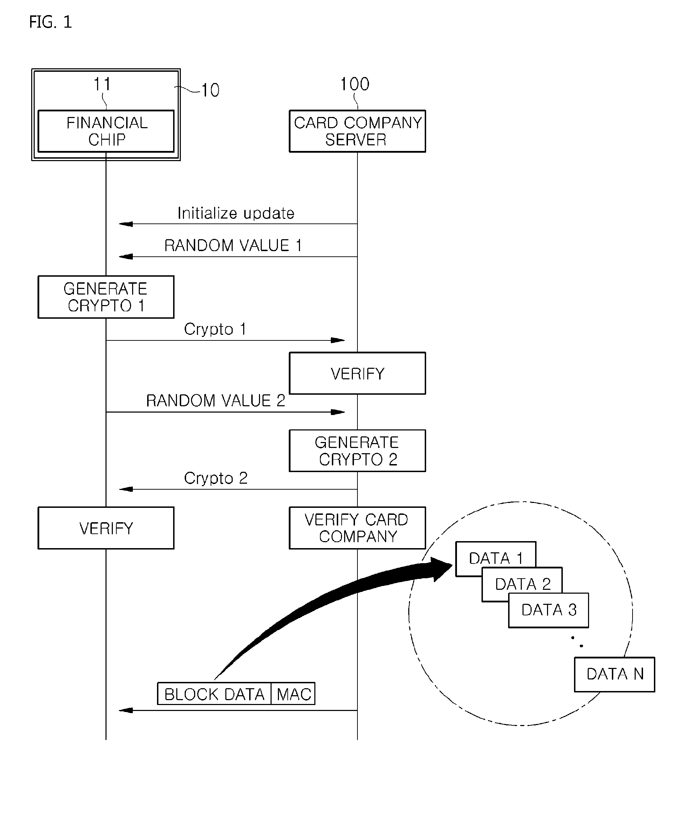

Meanwhile, a current payment device embedded with a SIM or USIM allows a financial chip and a card company server to mutually authenticate each other while performing data communication with the card company server, sequentially acquires card information, and then stores the acquired card information in the financial chip. The above-described method may require much time to issue card information to the financial chip. This is described with reference to FIG. 1.

FIG. 1 is a flowchart showing a conventional card information issuance process.

Referring to FIG. 1, the conventional card information issuance process is configured such that a card company server 100 provides an initialize command (initialize update) to a financial chip 11, and the financial chip 11 provides a first random value to the card company server 100 in response to the command. Here, the financial chip 11 generates a cryptographic value for the first random value, and the card company server 100 generates a cryptographic value for the first random value and provides it to the financial chip 11. The financial chip 11 may compare the cryptographic value received from the card company server 100 with the cryptographic value generated thereby, and authenticate the card company server when the cryptographic values are identical to each other, otherwise authentication will fail.

If the authentication of the card company server 100 succeeds, the card company server 100 generates a second random value, and provides the second random value to the financial chip 11. At this time, the card company server 100 generates a second cryptographic value for the second random value. Thereafter, the card company server 100 may receive a cryptographic value, provided from the financial chip 11 for the second random value, compare the received cryptographic value with the second cryptographic value generated thereby, and authenticate the financial chip when the cryptographic values are identical to each other.

In this way, after the financial chip 11 and the card company server 100 have mutually authenticated each other, the card company server 100 generates pieces of partial information by partitioning card information to be issued to the financial chip 11 into multiple sections, and provides the pieces of partial information to the financial chip 11, wherein verification data (Message Authentication Code: MAC) may be attached to each piece of partial information. Whenever partial information provided from the card company server 100 is received, the financial chip 11 checks and stores the verification data. After a piece of partial information has been processed, the financial chip 11 requests and receives subsequent piece of partial information from the card company server 100. If wireless communication between the financial chip 11 and the card company server 100 is interrupted while such a procedure is repeated, the financial chip 11 must be reissued with card information.

The conventional card information issuance process described with reference to FIG. 1 proposes a method by which the card company server accesses the financial chip using a wireless network and then issues card information. However, for the card information issued by the card company server using the wireless network, normal card information is issued only after the entire procedure of card information issuance has been completed, and thus an error in card issuance may occur.

In order to solve this problem, Korean Patent Application Publication No. 10-2009-0111520 proposes an instant Applet issuance system based on RF short-range communication, which acquires user authentication information from a client's mobile terminal and provides it to a card company server by using an issuance terminal capable of performing short-range communication with the client's mobile terminal, and which issues a mobile card to the client's mobile terminal, based on the authentication of the card company server. The technology disclosed in Korean Patent Application Publication No. 10-2009-0111520 is advantageous in that, compared to a method by which a card company server and a mobile terminal uses a wireless communication network, the stability of card information issuance is improved, but a mobile card must be issued using a separate issuance terminal and short-range wireless communication, and the information of a Universal IC card (UICC) and the personal information of the mobile terminal user must be provided to the issuance terminal. This means that the personal information of the mobile terminal user is exchanged between the issuance terminal and the card company server, rather than between the mobile terminal and the card company server, and thus there is concern that the personal information may be leaked.

### Disclosure

### Technical Problem

An object of the present invention is to provide a method for processing the issuance of a mobile credit card, which can improve issuance stability while reducing the time required to issue card information to a financial chip.

### Technical Solution

In order to accomplish the above object, the present invention provides a method for processing issuance of a mobile credit card, the method being performed by a card company server for issuing mobile credit card information to a financial chip embedded in a payment device, including transmitting a first random value to the financial chip and receiving a cryptographic value for the first random value from the financial chip, thus authenticating the financial chip, receiving a second random value from the financial chip and transmitting a cryptographic value for the second random value, thus obtaining authentication of a card issuance company from the financial chip, and packing the mobile credit card information composed of first data and second data into a single piece of block data and providing the single piece of block data to the payment device, after a procedure of authentication with the financial chip has been terminated, wherein the card company server is configured to, when the second data is not transmitted to the payment device, retransmit the second data so that the payment device successively receives the second data and forms the block data.

### Advantageous Effects

According to the present invention, the time required to issue a mobile credit card may be reduced, and card information transmitted from a card company server to a financial chip may be processed via one-time transmission, so that stopping of the issuance of cards caused by interruption or interference in wireless communication may be minimized, thus improving the stability of card issuance.

### Description of Drawings

FIG. 1 is a flowchart showing a conventional card information issuance process;
FIG. 2 is a flowchart showing a method for processing the issuance of a mobile credit card according to an embodiment of the present invention;
FIGS. 3 to 5 are reference diagrams showing a method by which a card company server provides block data to a financial chip;
FIG. 6 is a conceptual diagram showing a scheme in which a payment device stores block data in a financial chip after receiving the block data; and
FIGS. 7 and 8 are diagrams showing a comparison between the method for processing the issuance of a mobile credit card according to the present embodiment and a conventional issuance processing method.

### Best Mode

The term "payment device" described in the present specification may denote a device capable of processing payment in a mobile environment. Devices capable of processing payment in the mobile environment include devices such as a mobile phone, a smart phone, a notebook, and a Personal Digital Assistant (PDA). In addition, such a device may refer to a portable device among devices that are capable performing wireless communication and are equipped with a USIM chip or a financial chip, provided by a financial company to replace credit card payment.

The term "card information" described in the present specification may denote track 2 information defined in the International Organization for Standardization/International Electrotechnical Commission (ISO/IEC) 7813 standard. Track 2 information defined in the ISO/IEC 77813 standard may be configured to include a Primary Account Number (PAN) area including a Bank Identification Number (BIN), an Expire Date (ED) area, a Service Code (SC) area, and a Discretionary Data (DD) area. For details of the track 2 information, ISO/IEC 7813 standard may be referred to.

The term "encryption method" described in the present specification may denote an encryption method based on an algorithm, such as an Advanced Encryption Standard (AES), Rivest, Shamir, Adleman (RSA), Data Encryption Standard (DES), Triple DES (TDES), or Academy Research Institute Agency (ARIA) algorithm. The case where an encryption method is not separately described means that one of the AES, RSA, DES, TDES, and ARIA algorithms may be applied. It is apparent that, in addition to those algorithms, various algorithms may be applied, but the present invention is not limited to a specific algorithm.

The term "financial chip" described in the present specification denotes an integrated circuit (IC) that is used to store card information provided by a card company server for mobile payment and to provide the stored card information to a payment terminal in a wireless manner. Currently, a SIM or USIM has been used, but the financial chip is not limited thereto.

The term "application ID" described in the present specification may denote the unique identifier of an application, provided by a card company server or an App store to the payment device for mobile payment.

The term "credit card" described in the present specification may denote not only a credit card itself, but also a mobile terminal capable of conducting credit transactions instead of a credit card, or a financial chip or a USIM chip embedded in the mobile terminal.

Any type of device may be referred to as a "credit card" as long as the device is capable of processing payment and transmitting the track 2 information defined in the ISO/IEC 7813 that is the data standard of a credit card to a payment terminal or a card company server even if a mobile terminal is not equipped with a separate financial chip in a mobile payment environment.

The term "payment terminal" described in the present specification may denote a type of payment terminal that comes into contact with an IC chip embedded in an existing electronic credit card and reads track 2 information, and a type of terminal that obtains track 2 information from a mobile terminal, such as a mobile phone or a smart phone, while performing short-range wireless communication with the mobile terminal. Since the track 2 information contained in the mobile terminal is identical (or similar) to the track 2 information basically contained in an electronic credit card, a device for obtaining track 2 information via a mobile terminal and an existing payment terminal are collectively called a payment terminal.

Therefore, such a payment terminal may be regarded as a device that reads the track 2 information defined in the ISO/IEC 7813 standard by coming into contact with or approaching any one of an electronic credit card, a mobile terminal embedded with a USIM chip or a financial chip, and a mobile terminal for identifying a user using a UUID or a MAC address, and then transmits the read information to a relay server or a card company server.

In the present specification, the payment device is capable of performing short-range wireless communication with the payment terminal. In this case, the payment device may be configured such that a chip having a Near-Field Communication (NFC) function is separately embedded in a mobile terminal or is integrated with a USIM chip.

The term "Euro/Master/Visa (EMV) standard" described in the present specification may denote a standard cooperatively proposed by Euro/Master/Visa.

Hereinafter, the present invention will be described in detail with reference to the attached drawings.

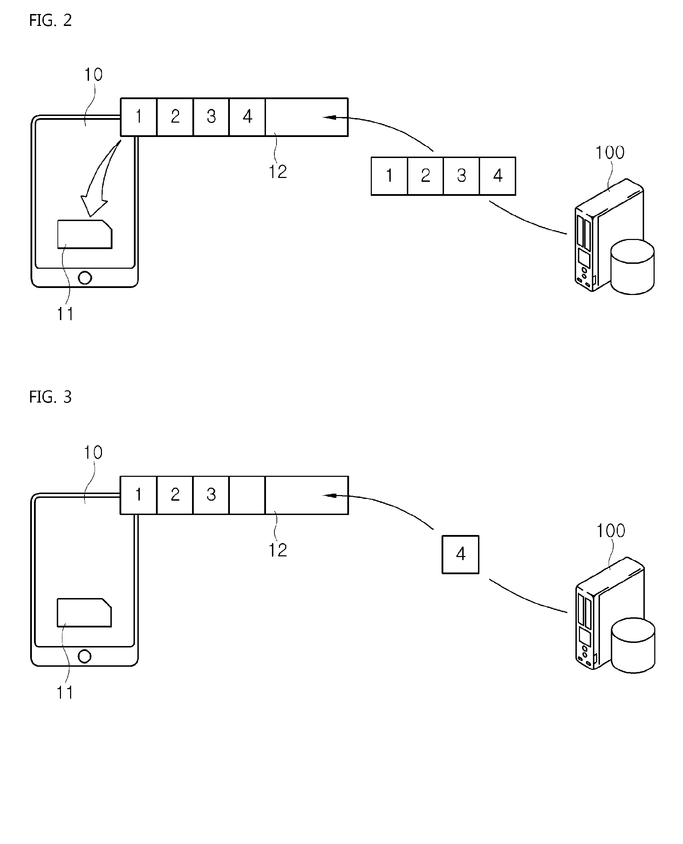

FIG. 2 is a flow diagram showing a method for processing the issuance of a mobile credit card according to an embodiment of the present invention.

Referring to FIG. 2, in the method for processing the issuance of a mobile credit card according to the present embodiment, a card company server 100 provides an initialize command (Initialize Update) to a financial chip 11, and the financial chip 11 provides a first random value to the card company server 100 in response to the command. Here, the financial chip 11 generates a cryptographic value for the first random value, and the card company server 100 generates a cryptographic value for the first random value and provides the cryptographic value to the financial chip 11. The financial chip 11 may compare the cryptographic value received from the card company server 100 with the cryptographic value generated thereby, and authenticate the card company server if the cryptographic values are identical to each other, otherwise a failure in authentication may occur. At this time, the card company server 100 and the financial chip 11 may generate cryptographic values for the first random value using the same encryption algorithm.

The card company server 100 and the financial chip 11 may use any one of encryption methods based on hash algorithms, such as Advanced Encryption Standard (AES), Rivest, Shamir, Adleman (RSA), Data Encryption Standard (DES), Triple DES (TDES), Academy Research Institute Agency (ARIA), Secure Hash Algorithm (SHA)-1, and Message-Digest 5 (MD5) algorithms. Preferably, the cryptographic values may be generated using a hash algorithm.

After the financial chip 11 has completed the authentication of the card company server 100, the card company server 100 generates a second random value and provides it to the financial chip 11. At this time, the card company server 100 generates a second cryptographic value for the second random value. Thereafter, the card company server 100 may receive a cryptographic value, provided from the financial chip 11 for the second random value, compare the received cryptographic value with the second cryptographic value generated thereby, and complete the authentication of the financial chip 11 if the cryptographic values are identical to each other.

After the financial chip 11 and the card company server 100 have mutually authenticated each other, the card company server 100 may pack multiple pieces of card information to be issued to the financial chip 11 into a single block. The present embodiment is characterized in that pieces of card information to be divided several times and transmitted are combined into a single unit and then a single file is formed. A single piece of verification data (Message Authentication Code: MAC) may be assigned to the block data packed into a single file. That is, multiple pieces of card information and multiple pieces of verification data are configured as a single piece of block data and a single piece of verification data.

By such a data configuration scheme, after the financial chip 11 and the card company server 100 have mutually authenticated each other, the card company server 100 may issue card information to the financial chip 11 at one time. The issued card information may include track 2 information defined in the ISO/IEC 7813 standard and the application ID of a payment application (App).

Further, by such a data configuration scheme, the financial chip 11 may complete a procedure for being issued card information via one-time MAC verification, and thus greatly decrease a probability that the issuance of card information will fail even in a situation where an interruption of wireless communication occurs.

Meanwhile, when the card company server 100 transmits block data to the financial chip 11, the block data is not necessarily stored in real time in the financial chip 11. In the present embodiment, the card company server 100 may buffer block data in memory provided in a payment device 10 (e.g. Random Access Memory: RAM), and use a method of recording the buffered block data in the financial chip 11. This procedure will be described in detail with reference to FIGS. 3 to 5.

FIGS. 3 to 5 are reference diagrams showing a method by which the card company server provides block data to the financial chip.

First, referring to FIG. 3, the card company server 100 may pack four pieces of partial information D1 to D4 into a single block, and transmit the single block to the payment device 10. FIG. 3 is a reference diagram showing the case where block data composed of four pieces of partial information D1 to D4 is intactly transmitted from the card company server 100 to the payment device 10.

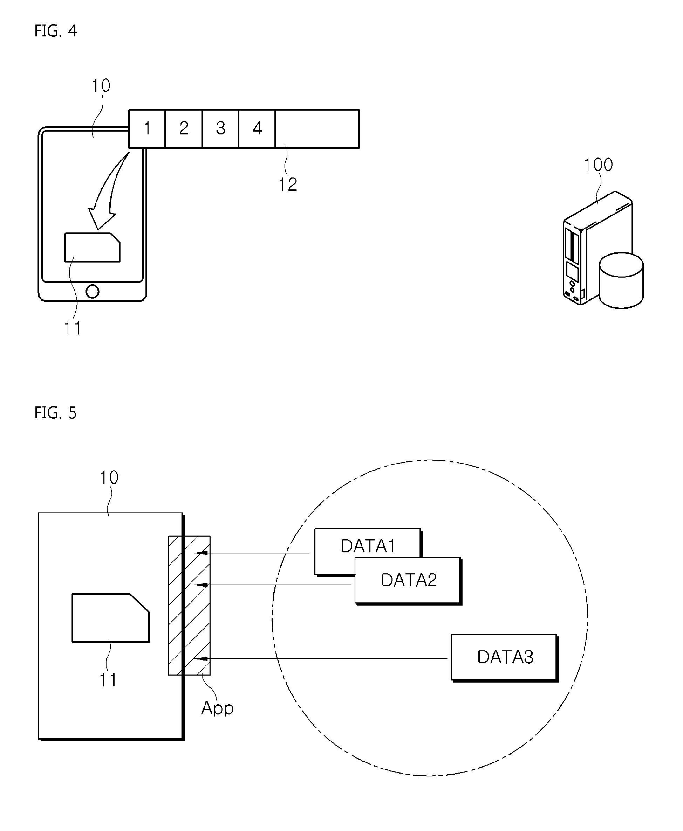

Next, FIG. 4 is a reference diagram showing the case where wireless data communication between the card company server 100 and the payment device 10 is interrupted.

When wireless data communication between the payment device 10 and the card company server 100 is interrupted, when the payment device 10 enters a radio shadow area, or when the payment device does not smoothly conduct a handover in a fast-moving vehicle, part of the block data (e.g. D4), which was transmitted from the card company server 100 to the payment device 10 in a wireless manner, may not be transmitted to the payment device 10. According to the conventional card information issuance scheme, when all of data (D1 to D4) constituting card information cannot be transmitted to the payment device 10, the card company server 100 and the payment device 10 must mutually authenticate each other again, and then newly receive data ranging from D1 to D4.

However, in the embodiment shown in FIG. 4, when part of pieces of partial information (D4), which was transmitted from the card company server 100 to the payment device 10 in a wireless manner, is not correctly transmitted, the card company server 100 retransmits only the partial information D4 to the payment device 10 after wireless data communication between the payment device 10 and the card company server 100 has been recovered. The payment device 10 may form the whole block data by connecting the newly received partial information D4 to the pieces of partial information D1, D2, and D3 previously received from the card company server 100, and then record the block data in the financial chip 11. The payment device 10 is provided with temporary storage memory 12, in which the pieces of partial information D1, D2, and D3 previously received from the card company server 100 are present in a stored state. After wireless data communication with the card company server 100 has resumed, the partial information D4 transmitted from the card company server 100 may be stored in the temporary storage memory 12. Thereafter, the payment device 10 may form a single piece of block data by connecting the partial information D1 to D4 stored in the temporary storage memory 120.

That is, it means that, in order to issue card information, the card company server 100 and the payment device 10 do not need to mutually authenticate each other from the beginning.

Such a block data processing method means that the payment device 10 may be promptly issued with card information within a short period of time even in an environment in which wireless data communication with the card company server 100 is impossible.

Further, the block data processing method may record card information (block data) in the financial chip 11 only when the payment device 10 receives verification data (MAC) attached to the end portion of the block data, and then the block data may not be forged even if the payment device 10 receives block data again from the card company server 100.

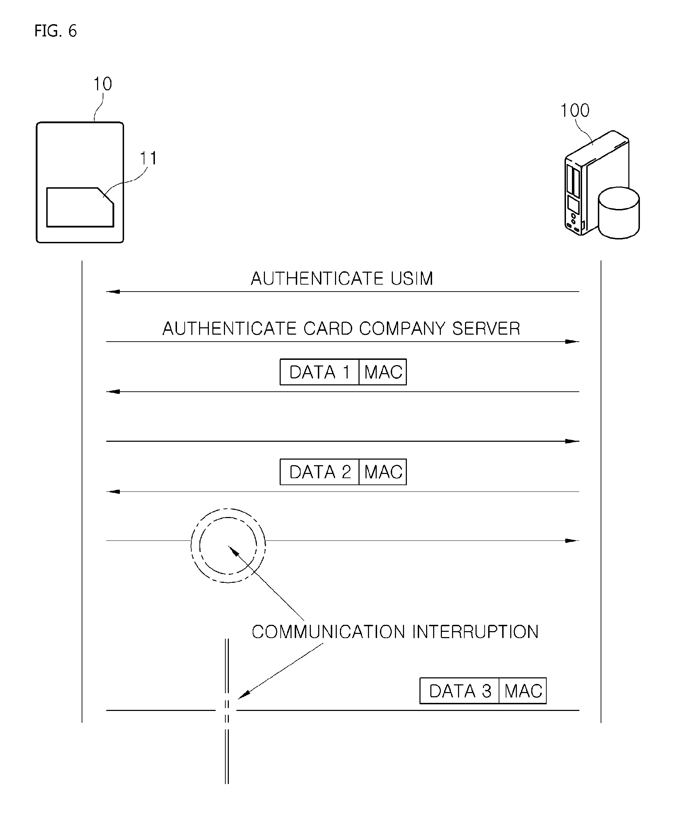

FIG. 6 is a conceptual diagram showing a scheme in which the payment device receives block data and then stores the block data in the financial chip.

Referring to FIG. 6, the payment device 10 may store block data in the financial chip 11 using a payment application (App) installed by the card company server 100. A scheme for dissolving the block data into multiple pieces of unitary data upon storing the block data, and for sequentially storing the dissolved unitary data DATA1 to DATA3 in the financial chip 11 may be adopted.

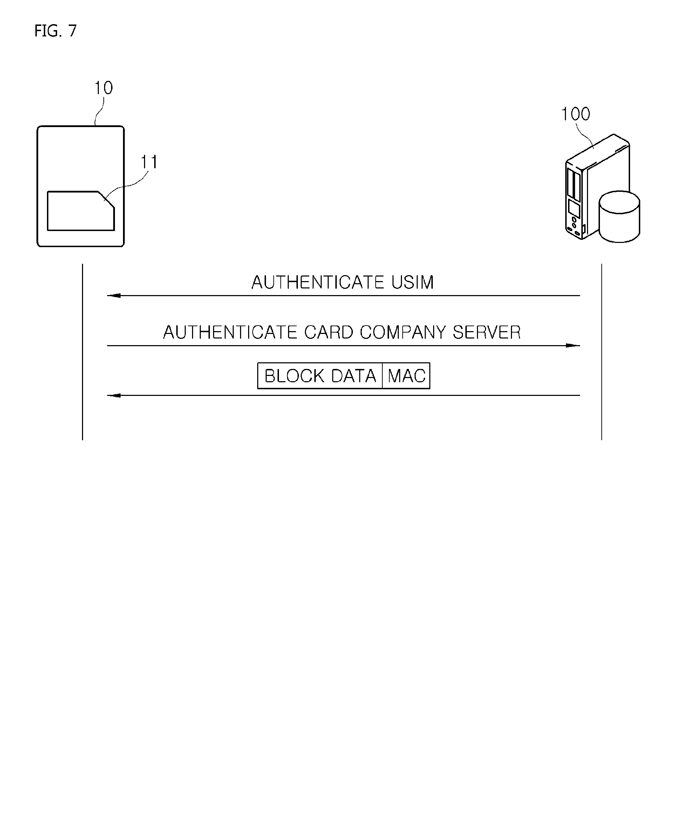

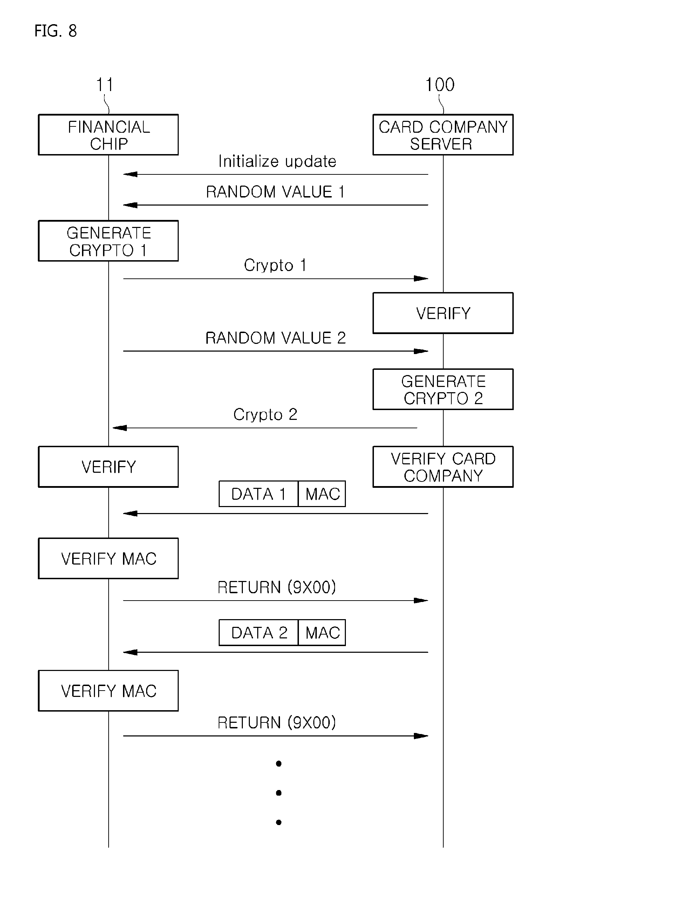

FIGS. 7 and 8 are diagrams showing a comparison between the method for processing the issuance of a mobile credit card according to the present embodiment and a conventional issuance processing method.

First, FIG. 7 illustrates a conventional method for processing the issuance of a mobile credit card. As shown in the drawing, the conventional method is configured such that a card company server 100 authenticates a USIM chip based on identicalness between a cryptographic value, encrypted by the financial chip 11 using a random value provided to the financial chip 11, and a cryptographic value generated by the card company server 100. Thereafter, the financial chip 11 authenticates the card company server 100 using a cryptographic value, generated thereby using a random value, and a cryptographic value received from the card company server 100 to the random value provided to the card company server 100. After the mutual authentication procedure between the card company server 100 and the financial chip 11 has been terminated, the card company server 100 sequentially transmits multiple pieces of partial information of card information to the financial chip 11. In this case, in a communication interruption situation during transmission, for example, when the payment device passes through a tunnel, undergoes a handover, or enters a radio shadow area, if even any one of the multiple pieces of partial information does not reach the financial chip 11, the card company server 100 cannot receive a return value, which is provided from the financial chip 11 to the card company server 100 when the reception of the partial information has succeeded. This results in a problem in which, if the card company server 100 does not receive the return value from the financial chip 11, it cannot transmit subsequent partial information.

Since the financial chip 11 must generate the overall card information by receiving all pieces of partial information from the card company server 100 and combining the partial information, there is a burden in which, when a partial area cannot be received due to communication interruption, a procedure authentication between the card company server and the USIM and the authentication of a card company must be performed again.

In contrast, referring to FIG. 8, the method for processing the issuance of a mobile credit card according to the present embodiment is configured such that the card company server 100 authenticates the financial chip by transmitting a random value to a financial chip embedded in the payment device 10 and comparing a cryptographic value, received from the financial chip 11 with a cryptographic value generated thereby, and such that the financial chip 11 authenticates the card company server 100 using the same method, and thereafter the card company server 100 transmits block data composed of a single piece of data and a single piece of verification data to the financial chip 11, thus completing the card information issuance procedure.

Since the size of block data currently ranges from several kilobytes to several hundreds of kilobytes and is not large, the block data is suitable for one-time transmission. By means of this transmission scheme, the risk of making it impossible to receive block data due to radio interference when the payment device 10 enters a radio shadow area, undergoes a handover, or enters a tunnel may be greatly reduced, compared to the example of FIG. 4. Furthermore, as shown in the example of FIG. 7, when multiple pieces of partial information for the card information are exchanged between the financial chip 11 and the card company server 100, the financial chip 11 must transmit a return value, indicating that the partial information has been correctly received, to the card company server 100. The card company server 100 must check the return value transmitted from the financial chip 11 and then transmit subsequent partial information. As a result, there may occur the case where the time required to check the return value is longer than the time actually required to transmit data having a size of only several kilobytes to several hundreds of kilobytes from the card company server 100 to the financial chip 11.

In contrast, according to the method of processing the issuance of a mobile credit card according to the present embodiment, the maximum number of times that the financial chip 11 transmits a return value to the card company server 100 after receiving block data is one. Even if a return value is not transmitted, when block data has normally reached the financial chip 11, the card information may be stored and used in the financial chip. It can be seen that time is hardly required to transmit a return value.

### <Description of the Reference Numerals in the Drawings>

10: payment device 11: financial chip
100: card company server

### Industrial Applicability

As described above, the present invention proposes a method of promptly and securely issuing a mobile credit card. The issuance method according to the present invention may contribute to the activation of mobile payment by financial companies such as credit card companies and banks that issue and distribute mobile credit cards.

## Claims

1. A method for processing issuance of a mobile credit card, the method being performed by a card company server for issuing mobile credit card information to a financial chip embedded in a payment device, comprising:
transmitting a first random value to the financial chip and receiving a cryptographic value for the first random value from the financial chip, thus authenticating the financial chip;
receiving a second random value from the financial chip and transmitting a cryptographic value for the second random value, thus obtaining authentication of a card issuance company from the financial chip; and
packing the mobile credit card information composed of first data and second data into a single piece of block data and providing the single piece of block data to the payment device, after a procedure of authentication with the financial chip has been terminated,
wherein the card company server is configured to, when the second data is not transmitted to the payment device, retransmit the second data so that the payment device successively receives the second data and forms the block data.

2. The method of claim 1, wherein the payment device stores the first data and the second data in temporary storage memory, and forms the block data after the first data and the second data have been completely stored in the temporary storage memory.

3. The method of claim 1, wherein the payment device is configured to, when the second data is not received, receive the second data from the card company server and form the block data, and thereafter record the block data in the financial chip.

4. The method of claim 1, wherein the block data is configured to include the first data, the second data, and verification data (Message Authentication Code).

5. The method of claim 1, wherein the second data includes multiple pieces of data.

6. The method of claim 1, wherein each of the first data and the second data includes an application identifier (ID) and credit card information.

7. The method of claim 1, wherein authenticating the financial chip comprises:
transmitting the first random value to the financial chip;
generating a first cryptographic value for the first random value; and
comparing a second cryptographic value transmitted from the financial chip with the first cryptographic value.

8. The method of claim 1, wherein obtaining authentication of the card issuance company comprises:
generating, by the financial chip, a second cryptographic value for the second random value;
generating, by the card company server, a third cryptographic value for the second random value; and
comparing, by the financial chip, the second cryptographic value with the third cryptographic value.

9. The method of claim 1, wherein the block data is transmitted once to the financial chip.

10. The method of claim 1, wherein the financial chip and the card company server generate cryptographic values for the first random value and the second random value using an identical encryption algorithm.

11. The method of claim 1, wherein each of the cryptographic values for the first random value and the second random value is generated via encryption based on a hash algorithm.

12. The method of claim 1, wherein the verification data is an Euro/Master/Visa (EMV) standard Message Authentication Code (MAC).
